# EUROPÄISCHE PATENTANMELDUNG

(11) **EP 3 859 574 A1**
(43) Veröffentlichungstag der Anmeldung: **04.08.2021**
(21) Anmeldenummer: 20154154.7
(22) Anmeldetag: 28.01.2020
(51) Int. Cl.: G06F 21/41, H04L 29/06

(54) **VERFAHREN ZUR UNIVERSELLEN EINMALANMELDUNG, SINGLE-SIGN-ON UND VORRICHTUNG**

(71) Anmelder: Siemens Aktiengesellschaft, 80333 München (DE)
(72) Erfinder: Eckl, Roland, 91301 Forchheim (DE); Herberth, Harald, 90522 Oberasbach (DE)

(57) **Zusammenfassung**

Kern der Erfindung stellt ein lokal auf dem technischen System, üblicherweise einem Rechner, betriebener Webserver dar, der die Fähigkeiten des WebSSO Protokolls ergänzt und um auf dem technischen System gehaltenen lokalen Zustand erweitert. Dieser lokale Zustand umfasst insbesondere, ob sich der Anwender schon in einem anderen Browsertyp oder in einer anderen Rich Client Anwendung angemeldet hat. Für die Unterstützung der Rich Client Anwendungen kann ein lokaler Desktop Server eingesetzt werden, dies ist insbesondere dann notwendig und vorteilhaft, wenn ein nicht web-basiertes Protokoll zur Anwendung kommen soll.

## Beschreibung

Technische Systeme werden inzwischen in allen Gebieten verwendet, in der Regel laufen auf solchen technischen Systemen eine oder auch mehrere Applikationen für verschiedene Aufgaben.
Viele Systeme und Applikationen erfordern vor der Verwendung eine Anmeldung durch den Benutzer. Dabei sind die Anwendungen entweder web-basiert (z. B. in der Cloud) oder desktop-basierte sogenannte Rich Client Applikationen.

Jede Anmeldung startet eine Sitzung, auch Session genannt. Diese wird in der Regel durch den Benutzer explizit durch eine Abmeldung geschlossen, kann aber implizit durch weitere Regeln geschlossen werden, z. B. durch den Ablauf einer bestimmten Zeit.

Als Anwender muss man sich üblicherweise in allen diesen Anwendungen gesondert und immer wieder neu anmelden. Darunter leidet sowohl die Benutzbarkeit, der Anwendungen, auch Usability genannt, als auch die Akzeptanz.

Vorteilhaft ist es daher, wenn der Anwender sich möglichst selten neu anmelden muss, und wenn diese Anmeldung über alle Anwendungen hinweg gemeinsam benutzt werden kann. Ein solches Konzept ist als Single-Sign-On (SSO, Einmalanmeldung) bekannt.

Grundsätzlich lässt sich zwischen unterschiedlichen Formen der Anmeldung (Authentifizierung) unterscheiden, die folgende Aufzählung ist dabei nicht abschließend: Username / Password, Verwendung von biometrischen Merkmalen wie Fingerabdruck oder Iris-Scan, Smartcard, Zertifikate oder Multi-Faktor-Authentifizierung. Parallel dazu erfordert jede Anwendung eine Anmeldung.

Wenn der Anwender sich bei jeder Anwendung mit unterschiedlichen Formen und Daten anmelden muss, wird sehr schnell deutlich, dass eine normierte und nur einmal stattfindende Anmeldung sowohl aus technischer als auch aus Benutzersicht vorteilhaft ist.

Ein wesentliches Problem besteht darin, dass sich das reine Konzept der Einmalanmeldung, Single-Sign-On, nicht ohne Weiteres einheitlich über verschiedene Ausführungsumgebungen (web-basierte Anwendungen in Web-Browsern, Rich Client Anwendungen auf einem Betriebssystem) hinweg realisieren lässt.

Web-Browser sind schon seit Jahren bekannte Computerprogramme zur Darstellung von Webseiten oder auch anderen Dokumenten oder Daten. Web-Browser werden auf Computern eingesetzt - wozu im weiteren Sinne auch mobile Endgeräte (wie PDAs oder Smartphones) zu zählen sind. Aufgrund ihrer großen Verbreitung haben Web-Browser eine wichtige Funktion als sogenannte "Thin Clients" von Webanwendungen.

Als Rich Client Anwendung wird eine Software bezeichnet, die applikationsspezifische Funktionalität wie die Benutzerschnittstelle (Präsentation) und die Logik der Anwendungen direkt beim Client beispielsweise bei Desktop-Applikationen oder auch auf mobilen Plattformen implementiert.

Ein Rich-Client besteht aus einer Applikation und integriert dazu: die Präsentation d.h. die Bereitstellung einer interaktiven Schnittstelle für den Benutzer durch die Applikation und die Anwendungslogik, die die eigentliche Funktionalität einer Applikation zur Verfügung stellt.

Bei Web-Applikationen ist schon lange ein Single-Sign-On (SSO) bekannt. Oft muss man sich im Web-Browser nur einmal anmelden, und solange der Web-Browser nicht geschlossen wird gilt diese Anmeldung in vielen unterschiedlichen durch diesen Web-Browser benutzten Web-Anwendungen.

Allerdings ist die Fähigkeit zu SSO oft auf nur einen Web-Browser-Typ oder gar eine Browser-Instanz beschränkt. Meldet sich der Anwender nun beispielsweise mit dem Internet-Explorer an, dann muss er sich bei der parallelen Verwendung eines anderen Web-Browsers, z. B. Firefox oder Chrome, erneut anmelden. Dies ist technisch notwendig, da die Browser Cookies zur Verwaltung von Anmeldungen verwenden, diese Cookies werden jedoch nicht zwischen Web-Browsern ausgetauscht.

Die Verwendung eines sogenannten Access Tokens zur Authentifizierung bei einem Server ist ebenfalls bereits bekannt, so z. B. aus der US 2017/0244695 A1.

lm Umfeld der Rich Client Anwendungen wird oft die Anmeldeinformation des Benutzers beim Betriebssystem (z. B. der Windows-Login) auch in der Anwendung verwendet. Nicht immer ist dies gewünscht oder sicher genug, dann verwenden Anwendungen auch spezielle Anmeldungen, siehe dazu den Einsatz von SAP mit Anmeldung über Smartcard. Oft will man in der Anwendung einen Benutzerwechsel durchführen, ohne sich auf dem Betriebssystem neu anmelden zu müssen. Dabei würde die Anwendung geschlossen, daher ist dieses Verfahren dann ebenfalls nicht anwendbar.

Darüber hinaus sind Verfahren und Realisierungen bekannt, welche es erlauben eine gemeinsame Authentifizierung für Web- und Rich Client Anwendungen zu verwenden, z. B. die Authentifizierung bei Microsoft Graph mit Hilfe eines Zugriffs-Token. Hier wird zwar dieselbe Nutzerbasis verwendet und derselbe Mechanismus für den Login herangezogen, jedoch fehlt der Single-Sign-On. Stattdessen muss der Anwender sich zumindest einmalig pro Applikation anmelden.

Bekannt ist weiterhin das web-basierte SSO (WebSSO) für nur einen Browser.

Dieses Verfahren unterstützt die gemeinsame Verwendung derselben Benutzer-Datenbasis für viele Anwendungen, und es unterstützt auch viele unterschiedliche Authentifizierungs-Formen.

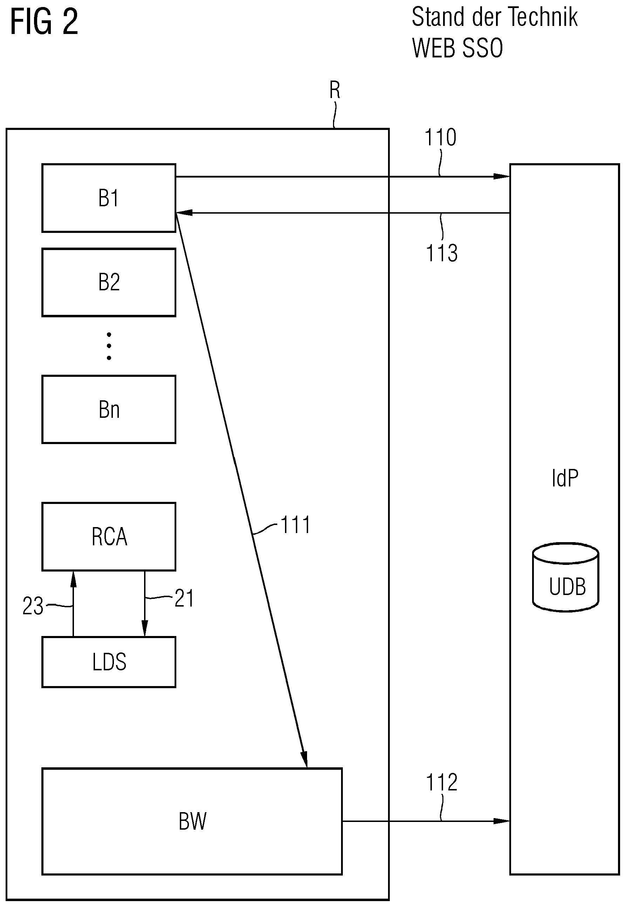

Das bekannte WebSSO Verfahren funktioniert, wie im Folgenden kurz zusammengefasst und in der Figur 2 beispielhaft dargestellt:
Web-basierte Anwendungen B1, B2, ... (allgemein auch relying parties, RP, genannt) wenden sich zum Zwecke der Authentifizierung des Anwenders an einen vorab bekannten zentralen WebSSO Server (auch Identity Provider, IdP, genannt) 110. Dies erfolgt in der Regel durch eine HTTP Umleitung (redirect 112). Falls der Anwender in einer ersten Anwendung angemeldet ist, wird der zweiten Anwendung derselben Benutzer zurückgeliefert (ohne weitere explizite Authentifizierung) und die zweite Anwendung ebenfalls in die Session-Liste aufgenommen.

Der WebSSO Server verwaltet optional für jeden Browser-Typ (beispielhaft durch ein Cookie referenziert) auch den Anmeldezustand aller in der Session beteiligten Anwendungen, dies wird für einen später zu erfolgenden Single-Sign-Out (Abmeldung des Benutzers aus allen Anwendungen) benötigt.

Die Benutzer-Datenbasis wird durch einen zentralen WebSSO Server verwaltet, zum Beispiel abgespeichert in einer "User Data Base" UDB, der den Benutzer authentifiziert, falls in der ersten Anwendung der Anwender noch nicht angemeldet ist, (z. B. durch Benutzername und Passwort) und die Sitzung / Session einrichtet.

Ausgehend davon wird dieses Verfahren als Gegenstand dieser Erfindung erweitert um die Fähigkeit, alle auf diesem Rechner installierten Browsertypen und alle teilnehmenden Rich Client Anwendungen bezüglich SSO (hin zu einem universalSSO, uSSO) zu unterstützen.

Es ist nun Aufgabe der Erfindung, das bekannte Verfahren für die Einmalanmeldung zu verbessern und die genannten Nachteile zu vermeiden.

Die Aufgabe wird gelöst durch ein Verfahren gemäß den Merkmalen des Patentanspruchs 1.

Das beanspruchte Verfahren wird zur Authentifizierung eines Benutzers auf einem technischen System zum Zugriff auf zumindest einen Dienst, der über einen zentralen WebSSO-Server angeboten wird oder zugreifbar ist, verwendet.

Der Benutzer muss, unter Verwendung eines auf dem technischen System installierten Browsers, bei dem zentralen WebSSO-Server eine Anmeldeinformation vorweisen, und wenn der zentrale WebSSO-Server feststellt, dass für die empfangene Anmeldung des Benutzers noch keine Anmeldeinformation vorliegt, dann liefert der zentrale WebSSO-Server eine umgeleitete Web-Seite an den Browser zurück, und der Browser versucht daraufhin, zumindest einen lokalen Server, d. h. einen aus dem Browser zugreifbaren Webserver oder Datenserver, über vorher festgelegten Schnittstellen-Adressen anzufragen. Dieser lokale (Daten-)Server umfasst Speichermittel, in denen ein lokaler Anmeldezustand des Benutzers abspeicherbar ist. Der lokale Server ist in einer vorteilhaften Ausführungsform der Erfindung als lokaler Webserver ausgeführt. Andere Ausführungsarten sind möglich, beispielsweise über Browsererweiterungen (extensions) oder Browser-Plugins angeschlossene Datenserver. Im Folgenden wird der Begriff lokaler Webserver auch stellvertretend für alle Ausprägungen eines lokalen Datenservers verwendet, dies soll aber nicht einschränkend für den Schutzbereich des Patentanspruchs verstanden werden.

Jeder angefragte lokale Server prüft den gespeicherten lokalen Anmeldezustand des Benutzers, und liefert ggf. in dem lokalen Anmeldezustand vorliegende Anmeldeinformationen des Benutzers an die umgeleitete Web-Seite zurück liefert.

Die Aufgabe wird weiterhin gelöst durch eine Vorrichtung mit den Merkmalen des Patentanspruchs 8.

Weitere vorteilhafte Ausführungsformen sind in den Unteransprüchen angegeben.

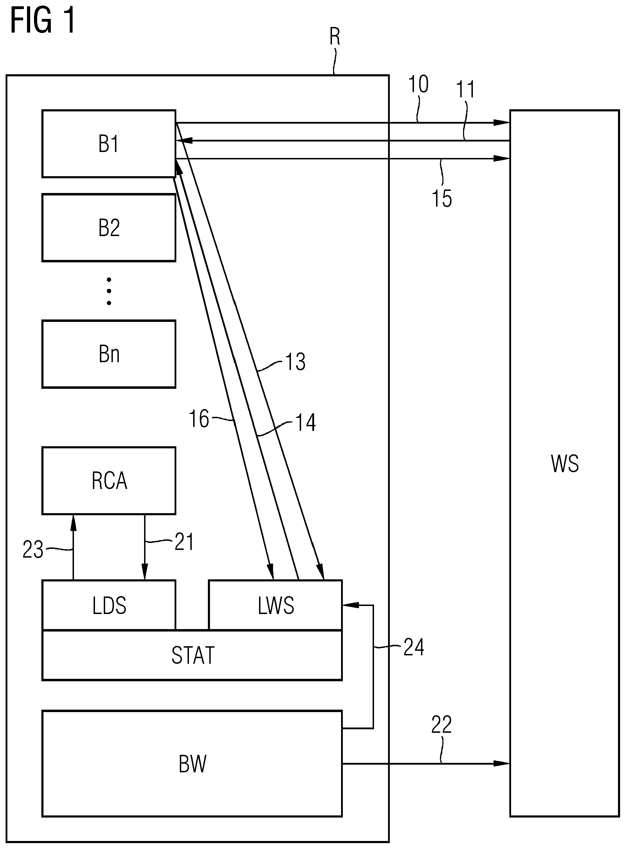

Im Folgenden ist die Erfindung auch durch die Figur 1 dargestellt. Figur 2 zeigt im Gegensatz dazu, wie bereits erwähnt, den Stand der Technik auf.

Für das Verständnis der Erfindung sind in den Figuren die eigentlichen Webanwendungen, die auf einem technischen System R (oder anderswo) laufen können, und für die der Browser das GUI Frontend darstellt, nicht abgebildet. Den wesentlichen Aspekt der Erfindung stellt ein lokal auf dem technischen System R, üblicherweise einem Rechner, betriebener (Daten-) Server dar, beispielhaft als Webserver ausgeführt, der das erfindungsgemäße Verfahren unterstützt, im Folgenden auch lokaler Webserver LWS genannt, der die Fähigkeiten des oben skizzierten WebSSO Protokolls ergänzt und um auf dem technischen System gehaltenen lokalen Zustand STAT erweitert. Dieser lokale Zustand umfasst insbesondere, ob sich der Anwender schon in einem anderen Browsertyp oder in einer anderen Rich Client Anwendung angemeldet hat. Für die Unterstützung der Rich Client Anwendungen kann alternativ ein lokaler Desktop Server LDS eingesetzt werden, dies ist insbesondere dann notwendig und vorteilhaft, wenn ein nicht web-basiertes Protokoll zur Anwendung kommen soll.

Es soll zunächst eine Webanwendung über einen Browser B1, B2, ... erstmalig aufgerufen werden, d. h. der Benutzer hat sich bislang noch nicht authentifiziert.

Meldet sich ein Browser (auch eine Browserinstanz / ein Browsertyp auf R) B1, B2, ... Bn beim WebSSO Server WS an, 10, und stellt der WebSSO Server fest, dass für diesen Browsertyp noch keine Anmeldung existiert, so versucht der WebSSO Server vor einer expliziten Authentifizierung des Anwenders festzustellen ob der Anwender sich auf dem Rechner R schon anderweitig angemeldet hat.

Dies geschieht durch den folgenden beispielhaften Ablauf:
1. Der WebSSO Server WS liefert gemäß der beanspruchten Erfindung eine SSO-Web-Seite an den Browser B1 zurück, 11.
2. Mit Hilfe dieser Web-Seite wird versucht, beispielsweise mittels darin enthaltenem JavaScript-Code, den lokalen Webserver LWS auf mehreren voraus festgelegten Ports anzusprechen, 13.
3. Meldet sich auf diese Anfrageversuche kein lokaler Webserver LWS, so wird im Weiteren angenommen, dass auf diesem Rechner die gesuchte Information nicht verfügbar ist, also beispielsweise das erfindungsgemäße erweiterte uSSO Verfahren nicht installiert ist, und es wird mit dem normalen WebSSO Verfahren weiter gemacht, also die Anmeldeseite dargestellt, siehe Fig. 2, 111, und der Anwender muss sich authentifizieren, 22.
4. Ein vorhandener lokaler Webserver LWS stellt anderenfalls über den lokalen Anmeldezustand STAT fest ob der Benutzer schon angemeldet ist (ein anderer Browser B1, B2, ... Bn oder eine andere Rich Client Anwendung RCA) und liefert dies an die uSSO Seite zurück 14.
5. Falls eine Anmeldung vorliegt, wird dies dem WebSSO Server WS in einer erneuten Umleitung 15 mitgeteilt. Diese Umleitung enthält die in abgesicherter Form notwendige Anmeldeinformationen, um feststellen zu können um welchen Benutzer es sich handelt.
6. Der WebSSO Server WS schließt die Web Anmeldung dieses Browsers dann mit dieser Information ab, ohne dabei den Anwender noch einmal explizit zu authentifizieren (entsprechend SSO) .
7. Sollte der Anwender in einem der vorhergehenden Schritte noch nicht angemeldet sein, kommt erst- und einmalig die Anmeldeseite an der sich der Anwender das erste Mal mit der Form der Wahl anmelden kann, 22.
8. Dieser erste Anmeldezustand wird an den lokalen Webserver LWS weitergegeben, 16 und aktualisiert. Damit ist der Anmeldezustand für weitere uSSO-Abfragen in STAT lokal verfügbar.

Benötigt der Anwender die Anmeldung an einer Rich Client Anwendung RCA, fragt diese über ein geeignetes (nicht notwendigerweise Web-) Protokoll beim lokalen Desktop Server LDS nach, 21, der eine vorliegende Anmeldung verwendet und zurückgibt, 23, falls diese existiert. Dabei wird diese Anwendung ebenfalls in den Anmeldezustand STAT aufgenommen.

Existiert allerdings im lokalen Desktop Server LDS noch keine aus anderer Quelle bekannten Anmeldung, so wird, analog, von diesem ein Browser-Fenster geöffnet und dort über den WebSSO Server eine WebSSO Anmeldung gestartet, 112 in Fig. 2. Deren Ergebnis wird wie weiter oben skizziert über den lokalen Webserver im lokalen Anmeldezustand vermerkt 24. Eine Änderung des lokalen Anmeldezustandes wird an die lokalen Rich Client Anwendungen RCA notifiziert, 23.

Die hier beschriebene Vorgehensweise für web-basierte Anwendungen und Desktop basierte Rich Client Anwendungen unterscheidet sich dabei in folgenden Aspekten von dem bereits bekannten Vorgehen.

Browser-basierte Anwendungen führen immer eine Weiterleitung (redirect) auf den WebSSO Server durch, erst der WebSSO Server probiert, ob ein lokaler Web-Server vorhanden ist. Dieser ist optional für WebSSO, und dieses Wissen soll nicht in jede Anwendung gebracht werden, sondern kompatibel zum WebSSO nur im WebSSO Server vorhanden sein.

Weiterhin muss in diesem Fall bei der Ausprägung des Datenservers als lokaler Webserver ein Web-Protokoll verwendet werden, da Browser aus Sicherheitsgründen ohne den Einsatz von Browser Extensions nur darüber mit Komponenten auf dem lokalen Rechner kommunizieren können.

Rich Client Anwendungen verwenden nicht notwendigerweise ein web-basiertes Protokoll, sondern können auf vorteilhaftere lokale Inter-Prozess-Kommunikations-Mittel (IPC) zurückgreifen, falls dies für die notwendige Notifizierung, 23, vorteilhaft ist. Insbesondere wird ein Browser-Fenster nur dann geöffnet, falls auch wirklich eine explizite Anmeldung durchzuführen ist.

Der lokale Webserver LWS und der zentrale WebSSO Server WS stehen in einem Vertrauensverhältnis zueinander. Der lokale Webserver LWS gibt den Anmeldezustand in einer Art weiter, dass kein Unbefugter mit diesen Informationen etwas anfangen kann, also üblicherweise verschlüsselt und/oder signiert. Der WebSSO Server WS akzeptiert Anmeldeinformation ausschließlich von vertrauenswürdigen lokalen Webservern LWS. Dieses Vertrauensverhältnis wird üblicherweise bei der Installation der uSSO Komponenten auf dem lokalen Rechner und deren authentifizierter und autorisierter Registrierung bei dem WebSSO Server aufgebaut und eingerichtet.

Ohne besondere weitere Ausführung gelten alle Eigenschaften der bekannten WebSSO Session auch im erweiterten Scope der erfindungsgemäßen "uSSO" Session. Diese sind
- Single Sign-Out, d. h. eine Abmeldung des Benutzers gilt für alle Browsertypen und Rich Client Anwendungen
- gemeinsamer Sprachwechsel für alle Browsertypen und Rich Client Anwendungen.

Vorzugsweise wird der lokale Webserver LWS dergestalt ausgeprägt, dass dieser ausschließlich von Clients auf dem lokalen Rechner erreicht werden kann; etwa applikativ indem der Server nur Verbindung von lokalen Adressen annimmt oder auf Betriebssystem-Ebene des Host-Rechners mittels Access-Control-Lists (ACL) oder vergleichbarer Verfahren. Dies ist möglich, da der externe WebSSO Server WS nie direkt zum lokalen Webserver Kontakt aufnimmt, sondern immer über JavaScript-Code der im Browser auf diesem Rechner ausgeführt wird.

Die erfinderische Neuheit besteht in der Verwendung eines lokalen Webservers, der sich in das schon existierende WebSSO Protokoll einbindet und den lokal verfügbaren Anmeldezustand zum Wissen des WebSSO Servers hinzufügt.

Weitere Vorteile der beschriebenen Lösung ergeben sich. Der Benutzer hat die gleiche Anmeldeoberfläche und Anmeldeformen für alle Browsertypen und Rich Client Anwendungen.

Nur eine explizite Anmeldung aus Anwendersicht für alle Browsertypen und Rich Client Anwendungen.
- Beibehaltung der aus dem Web bekannten vorteilhaften Eigenschaften eines Single-Sign-On.

Browser-Plugins ermöglichen ebenfalls den Austausch mit auf dem Rechner gespeichertem lokalen Zustand. Damit könnte uSSO in einer weiteren Ausprägung ebenfalls realisiert werden, dann aber mit dem Nachteil, dass für jeden Browsertyp ein eigenes Plugin erstellt werden muss. Plugins werden aus Sicherheitsgründen allerdings inzwischen gerne vermieden.

## Patentansprüche

1. Verfahren zur Authentifizierung eines Benutzers auf einem technischen System (R) zum Zugriff auf zumindest einen Dienst der über einen zentralen WebSSO-Server (WS) angeboten wird oder zugreifbar ist,
wobei der Benutzer unter Verwendung eines auf dem technischen System (R) installierten Browsers (BW, B1, B2, ... Bn) bei dem zentralen WebSSO-Server (WS) eine Anmeldeinformation vorweisen muss (10), und
der zentrale WebSSO-Server (WS) feststellt, dass für die empfangene Anmeldung des Benutzers noch keine Anmeldeinformation vorliegt,
**dadurch gekennzeichnet, dass**
der zentrale WebSSO-Server (WS) eine umgeleitete Web-Seite an den Browser (BW, B1, B2, ...) zurück liefert, und
der Browser (BW, B1, B2, ...) daraufhin versucht, zumindest einen lokalen Server (LWS) mit Speichermitteln, in denen ein lokaler Anmeldezustand (STAT) des Benutzers abspeicherbar ist, über vorher festgelegten Schnittstellen-Adressen anzufragen (12), und
jeder angefragte lokale Server (LWS) den gespeicherten lokalen Anmeldezustand (STAT) des Benutzers prüft, und
in dem lokalen Anmeldezustand (STAT) vorliegende Anmeldeinformationen des Benutzers an die umgeleitete Web-Seite und den zentralen WebSSO-Server (WS) zurück liefert (14, 15).

2. Verfahren gemäß Patentanspruch 1,
**dadurch gekennzeichnet, dass**
der Browser die Web-Seiten ausführt, die insbesondere in JavaScript-Code implementiert sind.

3. Verfahren gemäß Patentanspruch 1 oder 2,
**dadurch gekennzeichnet, dass**
von keinem der angefragten lokalen Server (LWS) eine passende Anmeldeinformation als Antwort zurückgesendet wird, worauf hin der Anwender mit der Anmeldeprozedur bei dem zentralen WebSSO-Server (WS) fortfährt und sich authentifiziert (22).

4. Verfahren gemäß einem der vorherigen Patentansprüche, **dadurch gekennzeichnet, dass**
die umgeleitete Webseite die für die Authentifizierung notwendigen Daten zur Identifikation des anzumeldenden Benutzers in abgesicherter Form enthält.

5. Verfahren gemäß einem der Patentansprüche 3 oder 4,
**dadurch gekennzeichnet, dass**
durch die Anmeldeseite, an der sich der Anwender mit einem Formular bei dem zentralen WebSSO-Server (WS) anmelden kann die Anmeldeinformationen auch an den lokalen Server (LWS) zur Speicherung im Anmeldestatus (STAT) weiter gereicht werden.

6. Verfahren gemäß einem der vorherigen Patentansprüche, **dadurch gekennzeichnet, dass**
der lokale Server (LWS) ausschließlich von Clients auf dem lokalen technischen System (R) erreicht werden kann.

7. Verfahren gemäß einem der vorherigen Patentansprüche, **dadurch gekennzeichnet, dass**
der zentrale WebSSO-Server (WS) und der lokale Server (LWS) bei der Einrichtung in ein Vertrauensverhältnis zueinander gesetzt werden.

8. Vorrichtung zur Durchführung einer Authentifizierung eines Benutzers auf einem technischen System (R) für den Zugriff auf zumindest einen Dienst der über einen zentralen WebSSO-Server (WS) angeboten oder zugreifbar ist, wobei der Benutzer unter Verwendung eines auf dem technischen System (R) installierten Browsers (BW, B1, B2, ... Bn) bei dem zentralen WebSSO-Server (WS) eine Anmeldeinformation vorweisen muss (10), und
der zentrale WebSSO-Server (WS) feststellt, dass für die empfangene Anmeldung des Benutzers noch keine Anmeldeinformation vorliegt,
**gekennzeichnet, durch**
zumindest einen lokalen Server (LWS), der von dem zentralen WebSSO-Server (WS) über eine umgeleitete Web-Seite an den Browser (BW, B1, B2, ... Bn) über vorher festgelegten Schnittstellen-Adressen ansprechbar ist, wobei
der lokale Server (LWS) Speichermittel (STAT) umfasst, die Informationen über einen lokalen Anmeldezustand des Benutzers gespeichert haben, und
diese vorliegenden Informationen über den lokalen Anmeldezustand zu dem Benutzer an die umgeleitete Web-Seite und den zentralen WebSSO-Server (WS) zurück lieferbar sind.

9. Verfahren gemäß Patentanspruch 8,
**dadurch gekennzeichnet, dass**
die Vorrichtung Mittel enthält, die für die Authentifizierung notwendigen Daten zur Identifikation des anzumeldenden Benutzers in abgesicherter Form enthält oder weiterleitet.

10. Verfahren gemäß einem der Patentansprüche 8 oder 9, **dadurch gekennzeichnet, dass**
der zentrale WebSSO-Server (WS) und der lokale Server (LWS) in ein Vertrauensverhältnis zueinander gesetzt sind.
